# EUROPEAN PATENT APPLICATION

(11) **EP 2 103 571 A1**
(43) Date of publication of application: **23.09.2009**
(21) Application number: 09155475.8
(22) Date of filing: 18.03.2009
(51) Int. Cl.: C01D 7/10, C01D 7/26

(54) **A method of removing fluoride impurities from trona and preparation of sodium bicarbonate**

(30) Priority: 18.03.2008 IN MU05352008; 03.12.2008 IN MU25272008
(71) Applicant: Tata Chemicals Limited, Mumbai 400001 (IN)
(72) Inventor: Sensarma, Soumen, 411045 Pune (IN); Phadtare, Sumant, 411045 Pune (IN); Sastry, Murali, 411045 Pune (IN)
(74) Representative: Swinkels, Bart Willem

(57) **Abstract**

The invention relates to a method of preparing sodium bicarbonate from trona containing sodium fluoride as an impurity comprising preparing a saturated solution of trona and filtering the trona solution to remove insoluble impurities; introducing carbon dioxide to the trona solution till the pH of the solution reaches the range of 7.5 to 8.75 and sodium carbonate in the trona solution is converted to sodium bicarbonate that precipitates; and recovering the precipitated sodium bicarbonate from the trona solution.

## Description

### FIELD OF THE INVENTION

The invention relates to the removal of fluoride from trona and the preparation of sodium bicarbonate. In particular, the invention relates to the preparation of sodium bicarbonate with reduced amount of impurities such as fluoride.

### BACKGROUND

Trona is a mineral comprising sodium sesquicarbonate (Na₂CO₃.NaHCO₃. 2H₂0) and is found in a number of deposits around the world, e.g. in Wyoming (U.S.A.), Magadi (Kenya), Tanzania (Lake Natron), Turkey, Venezuela and Egypt.

Trona is generally used for the manufacture of soda ash or sodium bicarbonate by well established techniques. The sodium bicarbonate thus produced generally incorporates a few impurities that were present in the original trona deposit and is therefore less pure than the product of the synthetic ammonia soda process for producing sodium bicarbonate.

Sodium bicarbonate finds wide use in industry and the production of sodium bicarbonate from trona suffers from the limitations of fluoride content, particularly in the case of trona obtained from Lake Magadi in Africa. It is a characteristic of the trona deposits found in Africa, and particularly with the deposit at Magadi (Kenya), that they incorporate sodium fluoride as encrustations on the trona crystals. The encrustations comprise large numbers of small individual crystals of sodium fluoride and the encrustations degrade into their constituent crystals during the initial milling of the trona.

Sodium bicarbonate with fine particle size is required for some applications such as health related, personal care, household, and specialty type products. Sodium bicarbonate with very fine particle size is useful in flue gas treatment, deodorizer preparation, and polyurethane or PVC foam generation. Bicarbonate with higher surface area and lower particle size is effective for flue gas treatment. Conventionally, fine sodium bicarbonate is prepared by milling of pure bicarbonate. However, this process has limitation as it is an energy intensive process.

Trona or crushed refined soda can be obtained naturally form Lake Magadi and is a relatively cheap material. But the presence of sodium fluoride beyond a certain threshold restricts the use of the end products derived from the trona or crushed refined soda. Moreover, obtaining high quality sodium bicarbonate having a fine particle size from trona is energy intensive and expensive.

### SUMMARY

The invention provides for a method of removing fluoride from trona comprising preparing a saturated solution of trona and filtering the trona solution to remove insoluble impurities; introducing carbon dioxide to the trona solution till the pH of the solution reaches the range of 7.5 to 8.75 and sodium carbonate in the trona solution is converted to sodium bicarbonate that precipitates; recovering the precipitated sodium bicarbonate from the trona solution; and decanting the trona solution after recovering sodium bicarbonate, the trona solution including dissolved fluoride impurities.

The invention also provides for a method of preparing sodium bicarbonate from trona comprising preparing a saturated solution of trona and filtering the trona solution to remove insoluble impurities, adding a surfactant to the trona solution, introducing carbon dioxide to the trona solution till the pH of the solution reaches the range of 7.5 to 8.75 and at least some sodium carbonate in the trona solution is converted to sodium bicarbonate that precipitates, recovering the precipitated sodium bicarbonate from the trona solution.

The invention also provides for sodium bicarbonate with reduced fluoride impurities produced by preparing a saturated solution of trona and filtering the trona solution to remove insoluble impurities; introducing carbon dioxide to the trona solution till the pH of the solution reaches the range of 7.5 to 8.75 and sodium carbonate in the trona solution is converted to sodium bicarbonate that precipitates; recovering the precipitated sodium bicarbonate from the trona solution; and decanting the trona solution after recovering sodium bicarbonate, the trona solution including dissolved fluoride impurities.

The invention also provides for sodium bicarbonate with reduced fluoride impurities produced by preparing a saturated solution of trona and filtering the trona solution to remove insoluble impurities, adding a surfactant to the trona solution, introducing carbon dioxide to the trona solution till the pH of the solution reaches the range of 7.5 to 8.75 and sodium carbonate in the trona solution is converted to sodium bicarbonate that precipitates, recovering the precipitated sodium bicarbonate from the trona solution. The Sodium bicarbonate has a particle size less than 75 micron. The sodium bicarbonate prepared may be used in various applications including as an anti-deodorizer; in a fungicidal application, in flue gas treatment; in specialty chemical applications including food grade and pharmaceutical grade applications or for foam generation.

### BRIEF DESCRIPTION OF ACCOMPANYING DRAWINGS

The accompanying drawings illustrate the preferred embodiments of the invention and together with the following detailed description serve to explain the principles of the invention.
FIG. 1 is a schematic illustration of the method of manufacturing sodium bi carbonate with reduced fluoride content and production of sodium carbonate in accordance with an embodiment of the invention.
FIG. 2 is a schematic illustration of the method of manufacturing sodium bi carbonate with fine particle size and reduced fluoride content and production of sodium carbonate in accordance with an embodiment of the invention.
FIG. 3 is a comparative chart illustrating the particle sizes of the sodium bicarbonate obtained with and without the use of a surfactant as provided by the method.

### DETAILED DESCRIPTION

To promote an understanding of the principles of the invention, reference will be made to the embodiment illustrated in the drawing and specific language will be used to describe the same. It will nevertheless be understood that no limitation of scope of the invention is thereby intended, such alterations and further modifications in the illustrated method and such further applications of the principles of the inventions as illustrated therein being contemplated as would normally occur to one skilled in art to which the invention relates.

It will be understood by those skilled in the art that the foregoing general description and the following detailed description are exemplary and explanatory of the invention and are not intended to be restrictive thereof.

A method of treatment of trona is described. More particularly a method for removing or reducing fluoride in trona in the manufacture of sodium bicarbonate or sodium carbonate is described. A process of preparing sodium bicarbonate having a fine particle size and substantially reduced fluoride impurities is also described.

The process involves the removal of fluoride from trona by first forming a solution of trona in water. Through the solution CO₂ is passed such that at least some sodium carbonate in the trona is converted to sodium bicarbonate. Sodium bicarbonate precipitates as it is less soluble as compared to sodium carbonate. The sodium fluoride present in the trona is dissolved in the solution along with the sodium carbonate. Precipitated sodium bicarbonate is separated from the supernatant to obtain sodium bicarbonate with reduced amount of fluoride content.

The solubility of sodium fluoride in water is approximately 4.2 g/100 mL at 18°C, with a higher solubility at room temperature. As trona on an average contains about 1 to 3 weight percent of sodium fluoride, the level of sodium fluoride in the trona solution formed is below the maximum solubility. By way of specific example, a solution of trona obtained by dissolving 5 gm of trona in 23 ml of water corresponds to approximately 50 mg of sodium fluoride which is soluble in 23 mL of water. In accordance with solubility data, the maximum amount of sodium fluoride that can be dissolved in 25 mL of water is ∼1g. As 50 mg is significantly lower than the maximum limit, the level of sodium fluoride in the trona is easily soluble in the solution, particularly so at room temperature or higher temperatures.

Sodium carbonate has a solubility of 30-33 g/100 mL of water at 25°C whereas sodium bicarbonate has solubility around 7.2 g/100 mL of water at 25°C. Thus, the sodium bicarbonate tends to precipitate out as compared to sodium carbonate.

In accordance with an aspect a saturated solution of trona is prepared before carbon dioxide is bubbled through it.

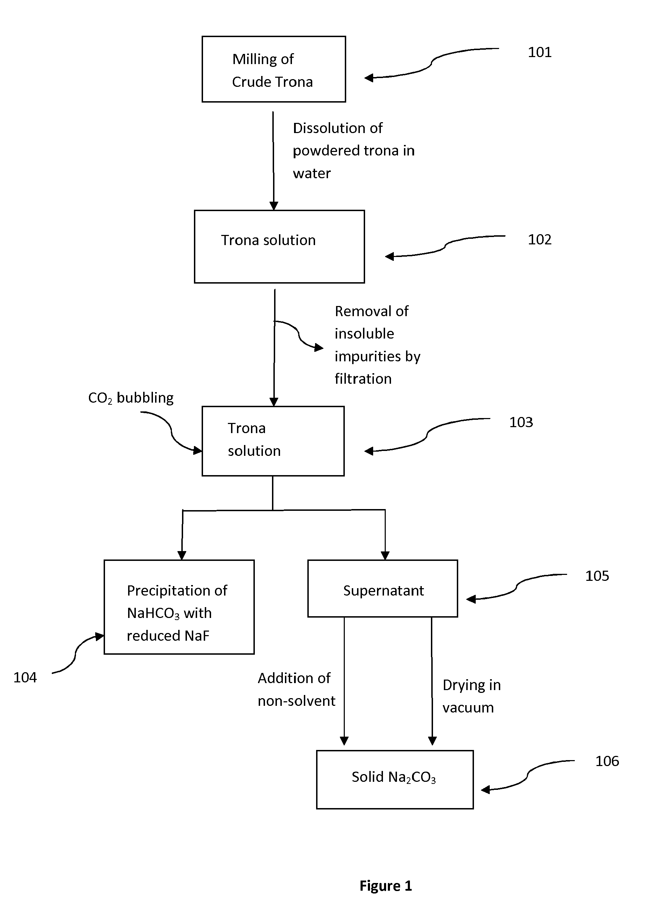

With reference to figure 1, the process of manufacturing sodium bicarbonate from trona containing fluoride impurities is illustrated. At step 101 the crude trona is milled to obtain a generally uniform powder and this powder trona is used to prepare a saturated solution of trona at step 102. Insoluble impurities are removed from the trona solution before further processing. Carbon dioxide is introduced in to the trona solution as indicated at step 103 till the pH of the trona solution is brought down in the range of 7.5 to 8.75 and sodium bicarbonate is precipitated, as indicated at step 104, and a supernatant solution including the dissolved fluoride impurities is obtained as indicated at step 105. The supernatant solution is decanted and contains some amount of sodium carbonate which is recovered from it either by the addition of a non solvent or by vacuum drying as indicated at step 106.

In accordance with an aspect the crude trona is milled to obtain a fine power. The milled trona is then dissolved in water to obtain a saturated solution of trona. In accordance with an aspect the saturated solution of trona is filtered to remove insoluble impurities.

As trona is alkaline, a saturated solution of trona typically has a pH in the range of 10 to 11 and sometimes higher. When carbon dioxide is bubbled through the solution, the carbon dioxide reacts with water to form carbonic acid, which reacts with sodium carbonate to form sodium bicarbonate that precipitates out. There exists a limit to the amount of carbon dioxide that can dissolve in the solution at room temperature and pressure. As the reaction proceeds it brings down the pH from approximately from 11 to 8 or 7.5.

The carbon dioxide may optionally be bubbled through the trona solution at a pressure varying between 1 to 10 bar. The carbon dioxide is bubbled through the trona solution at room temperature and optionally the temperature may be in the range of room temperature to 80°C. The carbon dioxide may optionally be bubbled through the trona solution for a period from 15 min to 2 hours, and preferably for a time period ranging from 20 minutes to 1hour. The pH of the trona solution may be brought down from 12 to 7.5, and typically is brought down from 11 to 8.

In accordance with an aspect the precipitated sodium bicarbonate may be separated from the supernatant by any method including but not limited to decanting or filtration. In accordance with a preferred embodiment the precipitated sodium bicarbonate is separated from the supernatant by decanting.

The sodium bicarbonate as produced according to the method has a purity level from 92 to 98% and it is crystalline and free flowing.

In accordance with an aspect, the sodium carbonate present in the supernatant may be recovered. In accordance with an embodiment the sodium carbonate may be recovered from the supernatant by the addition of any non-solvent. The non-solvent may include an organic solvent which will cause precipitation of the sodium carbonate.

In accordance with an embodiment, the supernatant liquid may be dried to obtain solid sodium carbonate. The drying of the supernatant may be carried out by any means including but not limited to vacuum drying.

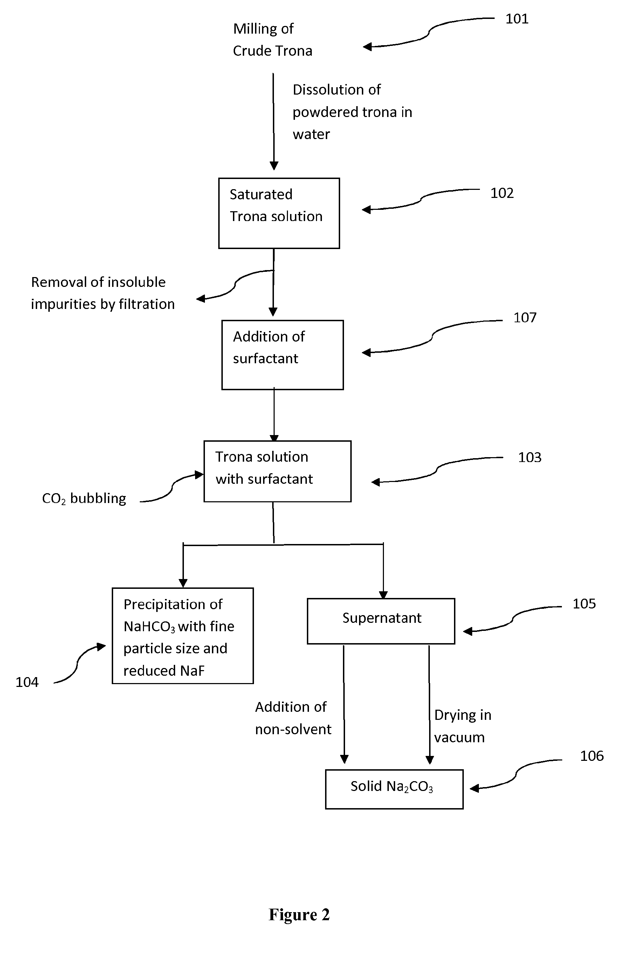

With reference to figure 2, the process of manufacturing sodium bicarbonate having fine particle size from trona containing fluoride impurities in accordance with an embodiment is illustrated. At step 101 the crude trona is milled to obtain a generally uniform powder and this powdered trona is used to prepare a saturated solution of trona at step 102. Insoluble impurities are removed from the trona solution before further processing. To the trona solution a surfactant is added as indicated by step 107. Carbon dioxide is introduced into the trona solution containing surfactant as indicated at step 103 till the pH of the trona solution is brought down in the range of 7.5 to 8.75 and sodium bicarbonate is precipitated, as indicated at step 104, and a supernatant including the dissolved fluoride impurities is obtained as indicated at step 105. The supernatant is decanted and contains some amount of sodium carbonate which may be recovered from it either by the addition of a non solvent or by vacuum drying as indicated at step 106.

The amount of surfactant added to the trona solution varies from 0.1 to 2.0 % by weight with respect to trona and particularly 0.1 to 1 % by weight with respect to trona.

Any surfactant including any cationic or anionic surfactant may be used. Anionic surfactant may be any anionic surfactant with sulphate group including but not limited to sodium lauryl sulphate (SLS) or sodium dodecyl sulphate (SDS) (C₁₂H₂₅SO₄Na), sodium undecyl triethoxy sulphate, sodium polyoxy ethylene alkyl ether sulphate, didodecyl dimethyl ammonium sulphate, sodium n-dodecyl sulphate, sodium lauryl ether sulphate and sodium tetradecyl sulphate. Equally, any anionic surfactant with sulphonate or sulphosuccinate group may be added to the trona solution. By way of specific example, a linear alkyl sulphonate may be added to the trona solution. Alternatively, sodium dodecyl triethoxy sulphonate may be used.

In accordance with an aspect, a cationic surfactant may be added to the trona solution. By way of specific example, the cationic surfactant may be cetyl trimethyl ammonium bromide or hexadecyl trimethyl ammonium bromide (CTAB). Alternatively, hexadecyl amine may be added as a surfactant to the trona solution.

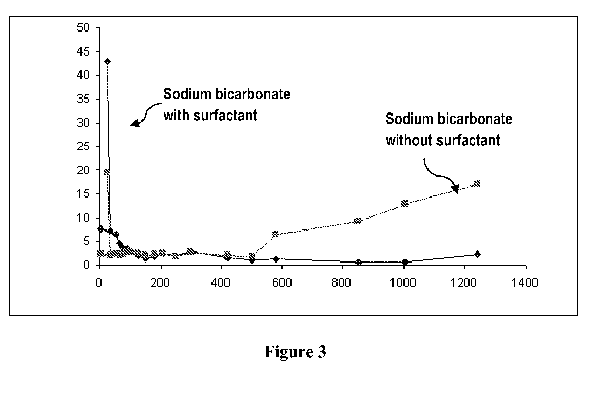

The sodium bicarbonate as produced according to the method has a purity level from 92 to 98% and it is crystalline with a substantial portion having particle size lower than 100 microns and particularly having particle size ranging from 30 to 75 micron. With reference to figure 3, a comparative chart illustrating the particle sizes of the sodium bicarbonate obtained with and without the use of a surfactant as provided by the method is provided. Analysis of the sodium bicarbonate obtained without using a surfactant in the manner as provided by the inventive method shows more than forty percent of the sodium bicarbonate particle having particle size greater than 500 micron.

The following examples are provided to explain and illustrate certain preferred embodiments of the process of the invention.

### Specific embodiments relate are described below:

A method of removing fluoride from trona comprising: preparing a saturated solution of trona and filtering the trona solution to remove insoluble impurities; introducing carbon dioxide to the trona solution till the pH of the solution reaches the range of 7.5 to 8.75 and sodium carbonate in the trona solution is converted to sodium bicarbonate that precipitates; recovering the precipitated sodium bicarbonate from the trona solution; and decanting the trona solution after recovering sodium bicarbonate, the trona solution including dissolved fluoride impurities.

A method of preparing sodium bicarbonate from trona comprising: preparing a saturated solution of trona and filtering the trona solution to remove insoluble impurities; adding a surfactant to the trona solution; introducing carbon dioxide to the trona solution till the pH of the solution reaches the range of 7.5 to 8.75 and at least some sodium carbonate in the trona solution is converted to sodium bicarbonate that precipitates; recovering the precipitated sodium bicarbonate from the trona solution.

Further, specific embodiments are described below:

Such method(s) wherein between 0.1 to 2 % by weight of surfactant with respect to the trona is added to the trona solution.

Such method(s) wherein the surfactant is any one of sodium dodecyl sulphate, sodium undecyl triethoxy sulphate, sodium polyoxy ethylene alkyl ether sulphate, didodecyl dimethyl ammonium sulphate, sodium n-dodecyl sulphate, sodium lauryl ether sulphate, sodium tetradecyl sulphate, linear alkyl sulphaonate, sodium dodecyl triethoxy sulphonate, sulphosuccinate, cetyl trimethyl ammonium bromide and hexadecyl amine.

Such method(s) wherein carbon dioxide is introduced in to the trona solution at a pressure in the range of 1 bar to 10 bar.

Such method(s) wherein the trona solution is heated to a temperature up to 75 degrees °C before the introduction of carbon dioxide.

Such method(s) wherein carbon dioxide is introduced into the trona solution for a period of 15 min to 2 hours.

Such method(s), further comprising recovering sodium carbonate from the trona solution by adding a non solvent or by vacuum drying the trona solution.

Such method(s) wherein the sodium bicarbonate is used as an anti-deodorizer; in a fungicidal application, in flue gas treatment; in specialty chemical applications including food grade and pharmaceutical grade applications or for foam generation.

Further embodiments are described below:

Sodium bicarbonate with reduced fluoride impurities produced by preparing a saturated solution of trona and filtering the trona solution to remove insoluble impurities; introducing carbon dioxide to the trona solution till the pH of the solution reaches the range of 7.5 to 8.75 and sodium carbonate in the trona solution is converted to sodium bicarbonate that precipitates; recovering the precipitated sodium bicarbonate from the trona solution; and decanting the trona solution after recovering sodium bicarbonate, the trona solution including dissolved fluoride impurities.

Such sodium bicarbonate, wherein the method of preparation further comprises addition of a surfactant to the trona solution prior to passing of carbon dioxide.

Such sodium bicarbonate with reduced fluoride impurities having particle size less than 75 micron.

Further embodiments are described below:

A method substantially as herein described with reference to and as illustrated by the accompanying drawings;

A method of removing sodium fluoride from trona comprising preparing a saturated solution of trona and filtering the trona solution to remove insoluble impurities; introducing carbon dioxide to the trona solution till the pH of the solution reaches the range of 7.5 to 8.75 and sodium carbonate in the trona solution is converted to sodium bicarbonate that precipitates; recovering the precipitated sodium bicarbonate from the trona solution; and decanting the trona solution after recovering sodium bicarbonate, the trona solution including dissolved fluoride impurities; and

Sodium bicarbonate substantially as herein described with reference to and as illustrated by the accompanying drawing.

### Examples 1

About 5 g of trona was dissolved in 23 mL water and the solution was filtered. Through the solution CO₂ was bubbled till the pH comes down from 9.8 to 8.3. A whitish precipitate is obtained which is filtered. Residue was dried and kept for further characterization for fluoride analysis and also SEM analysis.

The bicarbonate thus produced has fluoride content 0.011% and yield was 55%.

### Example 2

About 4.95 g of trona was dissolved in 23 mL water and the solution was filtered to remove the insoluble fraction. Through the solution carbon dioxide was bubbled till the pH comes down from 10.2 to 8.3. A white precipitate was obtained which was filtered and dried and kept for further characterization.

Amount of sodium fluoride in the sodium bicarbonate was 0.025% with a yield around 40%. Amount of fluoride in the supernatant liquid was 1.3% as tabulated in table 1 below.

### Example 3

About 5 g of trona was dissolved in 23 mL water and the solution was filtered to remove the insoluble fraction. To the saturated solution of trona gaseous CO₂ was bubbled to bring down the pH from 10.48 to 8.4. A white precipitate was obtained which was filtered and dried and kept for further characterization.

The supernatant liquid was dried and the solid obtained was kept for further characterization. The amount of sodium fluoride in the bicarbonate was 0.02% with a yield around 40%. As illustrated in Table 1 below the amount of fluoride in the supernatant liquid was 1.3%.

**Table 1: Fluoride analysis in different trona samples by Ion chromatogram.**

| **S. No** | **Weight of trona (g)** | **Actual Fluoride (%)** | **Fluoride in precipitated bicarbonate (%)** | **Fluoride in supernatant liquid (%)** |
|---|---|---|---|---|
| 1 | 5 | 0.07 | 0.01 | 0.066 |
| 2 | 4.95 | 1 | 0.025 | 1.3 |
| 3 | 5 | 1.1 | 0.02 | 1.3 |

### Example 4

About 5 gm of crushed refined trona was taken in a beaker, to that about 23 ml of distilled water was added, stirred for 10 minutes, followed by filtration to remove the insoluble impurities. To the filtered trona solution 100.5 mg cetyl trimethyl ammonium bromide is added and stirred. Carbon dioxide (CO₂) gas is bubbled for 45 minutes (approximate). Formation of white precipitate of sodium bicarbonate is observed. The solution is filtered to obtain sodium bicarbonate particles that are dried and weighed. Weight of sodium bicarbonate is 2.21 gm.

### Example 5

About 5 gm of crushed refined trona was taken in a beaker, to that about 23 ml of distilled water was added, stirred for 10 minute, followed by filtration to remove the insoluble impurities. In filtered trona solution 50.8 mg of cetyl trimethyl ammonium bromide (CTAB) is added and stirred. Carbon dioxide (CO₂) gas is bubbled for 45 minute (approximate). Formation of white precipitate of sodium bicarbonate is observed. The solution is filtered to obtain sodium bicarbonate particles that are dried and weighed. Weight of sodium bicarbonate is 2.28 gm.

Particle size analysis of the sodium bicarbonate obtained by using cetyl trimethyl ammonium bromide is tabulated in the table 2 below. It is observed that over fifty percent of the sodium bicarbonate formed has particle size lower than 75 micron.

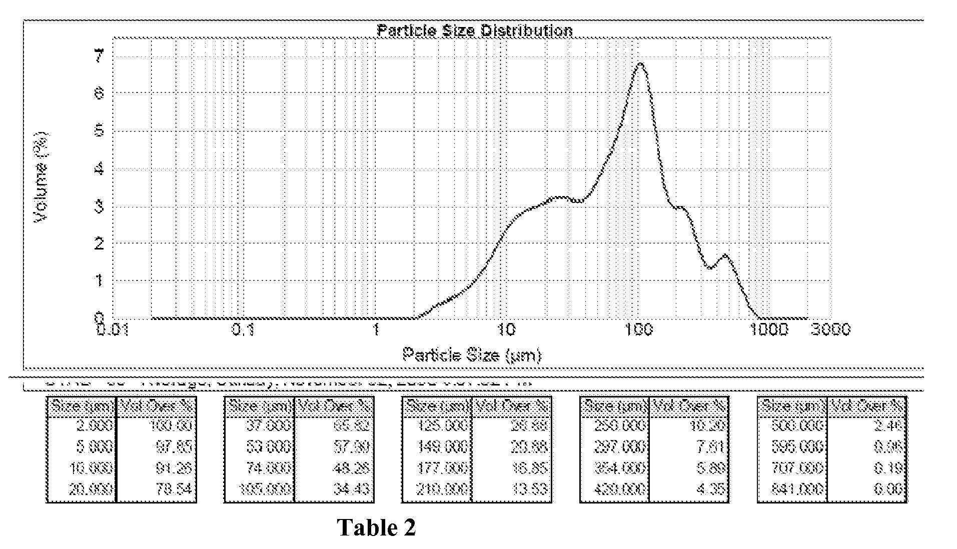

### Example 6

About 5 gm of crushed refined trona was taken in a beaker, to that about 23 ml of distilled water was added, stirred for 10 minute, followed by filtration to remove the insoluble impurities. In filtered trona solution 100.2 mg of sodium dodecyl sulphate (SDS) was added and stirred. Carbon dioxide (CO₂) gas is bubbled for 45 minute (approximate). Formation of white precipitate of sodium bicarbonate is observed. The solution is filtered to obtain sodium bicarbonate particles that are dried and weighed. Weight of sodium bicarbonate is 2.09 gm.

### Example 7

About 5 gm of crushed refined trona was taken in a beaker, to that about 23 ml of distilled water was added, stirred for 10 minute, followed by filtration to remove the insoluble impurities. In filtered trona solution add 50.6 mg of sodium dodecyl sulphate was added and stirred. Carbon dioxide (CO₂) gas is bubbled for 45 minute (approximate). Formation of white precipitate of sodium bicarbonate is observed. The solution is filtered to obtain sodium bicarbonate particles that are dried and weighed. Weight of sodium bicarbonate is 2.23 gm.

### Example 8

About 5 gm of crushed refined trona was taken in a beaker, to that about 23 ml of distilled water was added, stirred for 10 minute, followed by filtration to remove the insoluble impurities. In filtered trona solution 25.4 mg of sodium dodecyl sulphate was added and stirred. Carbon dioxide (CO₂) gas is bubbled for 45 minute (approximate). Formation of white precipitate of sodium bicarbonate is observed. The solution is filtered to obtain sodium bicarbonate particles that are dried and weighed. Weight of sodium bicarbonate is 2.40 gm.

### Example 9

About 5 gm of crushed refined trona was taken in a beaker, to that about 23 ml of distilled water was added, stirred for 10 minute, followed by filtration to remove the insoluble impurities. In filtered trona solution 10.6 mg of sodium dodecyl sulphate was added and stirred. Carbon dioxide (CO₂) gas is bubbled for 45 minute (approximate). Formation of white precipitate of sodium bicarbonate is observed. The solution is filtered to obtain sodium bicarbonate particles that are dried and weighed. Weight of sodium bicarbonate is 2.16 gm.

Particle size analysis of the sodium bicarbonate obtained by using sodium dodecyl sulphate is tabulated in the table 3 below. It is observed that over fifty percent of the sodium bicarbonate formed has particle size lower than 75 micron.

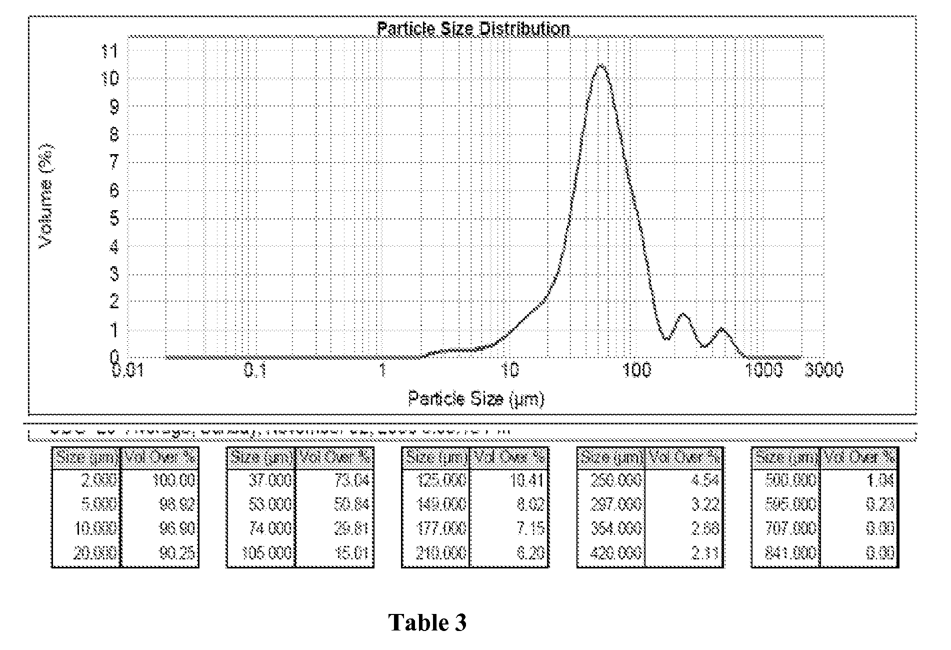

### Example 10

About 5 gm of crushed refined trona was taken in a beaker, to that about 23 ml of distilled water was added, stirred for 10 minute, followed by filtration to remove the insoluble impurities. In filtered trona solution 50.3 mg of hexadecyl amine was added and stirred. Carbon dioxide (CO₂) gas is bubbled for 45 minute (approximate). Formation of white precipitate of sodium bicarbonate is observed. The solution is filtered to obtain sodium bicarbonate particles that are dried and weighed. Weight of sodium bicarbonate is 2.16 gm.

### Example 11

About 5 gm of crushed refined trona was taken in a beaker, to that about 23 ml of distilled water was added, stirred for 10 minute, followed by filtration to remove the insoluble impurities. In filtered trona solution 25.1 mg of hexadecyl amine was added and stirred. Carbon dioxide (CO₂) gas is bubbled for 45 minute (approximate). Formation of white precipitate of sodium bicarbonate is observed. The solution is filtered to obtain sodium bicarbonate particles that are dried and weighed. Weight of sodium bicarbonate is 2.21 gm.

Particle size analysis of the sodium bicarbonate obtained by using hexadecyl amine is tabulated in the table 4 below. It is observed that over fifty percent of the sodium bicarbonate formed has particle size lower than 75 micron.

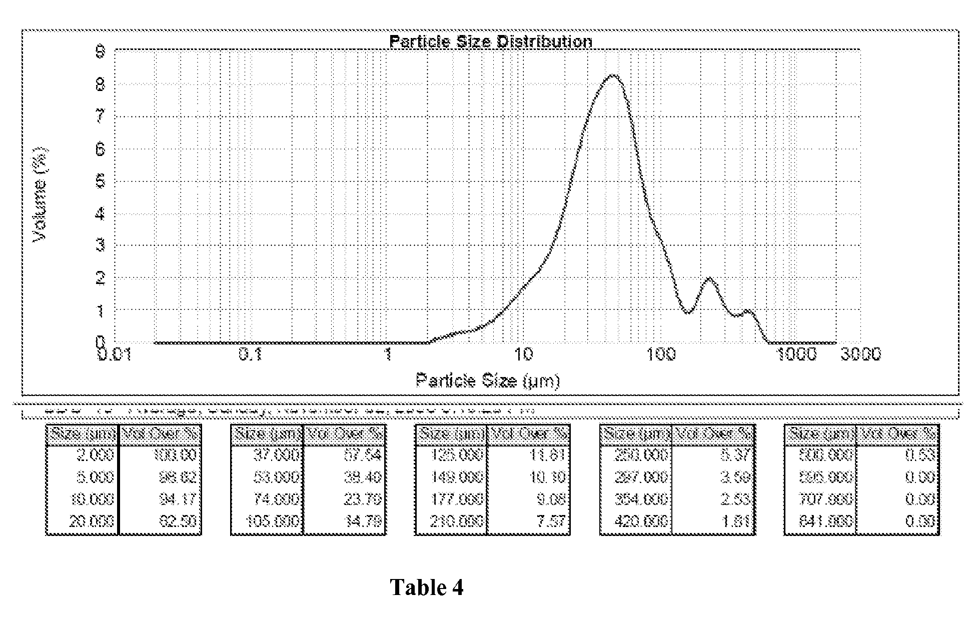

### INDUSTRIAL APPLICABILITY

The method described provides with a simple and cheap way of effectively reducing fluoride ion to levels below the current internationally acceptable standards by exploiting the solubility of carbonate and bicarbonate.

The method described allows the use of a cheap raw material such as carbon dioxide to precipitate a pure form of sodium bicarbonate having from a saturated solution of trona. The amount of sodium fluoride present can substantially be reduced and pure bicarbonate crystal can be obtained from trona or crushed refined soda. The sodium bicarbonate produced may find various applications including in flue gas treatment and specialty chemical applications such as food grade and pharmaceutical grade. The sodium bicarbonate obtained may also be used a deodorizer and for generating CO₂ to be used in foam generation and fungicide application. Both sodium carbonate and sodium bicarbonate are obtainable with reduced fluoride content.

The use of a surfactant in the manner as described by the inventive method gives more than forty percent of the sodium bicarbonate having particle size distribution below 40 to 60 micron. Pure sodium bicarbonate with less fluoride impurities and having particle size below 37 micron also can be easily obtained by the inventive method.

Sodium bicarbonate with very fine particle size can be useful in flue gas treatment, deodorizer preparation, and polyurethane/PVC foam generation. Sodium bicarbonate with higher surface area and lower particle size are effective for flue gas treatment.

The particle size of sodium bicarbonate also affects the bubble size of carbon dioxide obtained by the decomposition of sodium bicarbonate. Carbon dioxide with controlled bubble size is useful for synthesizing polyurethane/PVC foam. Sodium bicarbonate with fine particle size may work as a substitute for azodicarbonamide, an expensive organic compound as compared to sodium bicarbonate.

## Claims

1. A method of removing fluoride from trona comprising:
preparing a saturated solution of trona and filtering the trona solution to remove insoluble impurities;
introducing carbon dioxide to the trona solution till the pH of the solution reaches the range of 7.5 to 8.75 and sodium carbonate in the trona solution is converted to sodium bicarbonate that precipitates;
recovering the precipitated sodium bicarbonate from the trona solution; and
decanting the trona solution after recovering sodium bicarbonate, the trona solution including dissolved fluoride impurities.

2. A method of preparing sodium bicarbonate from trona comprising:
preparing a saturated solution of trona and filtering the trona solution to remove insoluble impurities;
adding a surfactant to the trona solution;
introducing carbon dioxide to the trona solution till the pH of the solution reaches the range of 7.5 to 8.75 and at least some sodium carbonate in the trona solution is converted to sodium bicarbonate that precipitates;
recovering the precipitated sodium bicarbonate from the trona solution.

3. A method as claimed in claim 2, wherein between 0.1 to 2 % by weight of surfactant with respect to the trona is added to the trona solution.

4. A method as claimed in claims 2 or 3 wherein the surfactant is any one of sodium dodecyl sulphate, sodium undecyl triethoxy sulphate, sodium polyoxy ethylene alkyl ether sulphate, didodecyl dimethyl ammonium sulphate, sodium n-dodecyl sulphate, sodium lauryl ether sulphate, sodium tetradecyl sulphate, linear alkyl sulphaonate, sodium dodecyl triethoxy sulphonate, sulphosuccinate, cetyl trimethyl ammonium bromide and hexadecyl amine.

5. A method as claimed in any one of the preceding claims, wherein carbon dioxide is introduced in to the trona solution at a pressure in the range of 1 bar to 10 bar.

6. A method as claimed in any one of the preceding claims, wherein the trona solution is heated to a temperature up to 75 degrees °C before the introduction of carbon dioxide.

7. A method as claimed in any one of the preceding claims, wherein carbon dioxide is introduced into the trona solution for a period of 15 min to 2 hours.

8. A method as claimed in any one of the preceding claims, further comprising recovering sodium carbonate from the trona solution by adding a non solvent or by vacuum drying the trona solution.

9. A method as claimed in any one of the preceding claims, wherein the sodium bicarbonate is used as an anti-deodorizer; in a fungicidal application, in flue gas treatment; in specialty chemical applications including food grade and pharmaceutical grade applications or for foam generation.

10. Sodium bicarbonate with reduced fluoride impurities produced by preparing a saturated solution of trona and filtering the trona solution to remove insoluble impurities;
introducing carbon dioxide to the trona solution till the pH of the solution reaches the range of 7.5 to 8.75 and sodium carbonate in the trona solution is converted to sodium bicarbonate that precipitates;
recovering the precipitated sodium bicarbonate from the trona solution; and
decanting the trona solution after recovering sodium bicarbonate, the trona solution including dissolved fluoride impurities.

11. Sodium bicarbonate as claimed in claim 10 further comprising addition of a surfactant to the trona solution prior to passing of carbon dioxide.

12. Sodium bicarbonate with reduced fluoride impurities as claimed in claim 11 having particle size less than 75 micron.

13. Sodium bicarbonate obtainable by the method according to any one of claims 1-9 drawing.
